# EUROPEAN PATENT APPLICATION

(11) **EP 4 443 859 A1**
(43) Date of publication of application: **09.10.2024**
(21) Application number: 22901396.6
(22) Date of filing: 01.12.2022
(51) Int. Cl.: H04M 3/523, G06Q 50/12, H04M 11/00

(54) **COMMUNICATION SYSTEM**

(30) Priority: 03.12.2021 JP 2021196880
(71) Applicant: Kotozna, Inc., Tokyo 107-0051 (JP)
(72) Inventor: GOTO Genri, Tokyo 107-0051 (JP)
(74) Representative: Eisenführ Speiser
(86) International application number: PCT/JP2022/044309
(87) International publication number: WO 2023/100965

(57) **Abstract**

A communication system (1) acquires staff language information and availability information in relation to each staff terminal (4), and determines, in relation to the staff terminal (4) that is available to deal with a guest, whether guest language information and the staff language information match. In the case of match, the communication system (1) causes communication in a guest language to be started with the staff terminal (4). In the case of non-match, the communication system (1) transmits a selection request to a guest terminal (3), and causes communication with the staff terminal (4) through machine translation to be started when a machine translation communication request is received from the guest terminal (3). When a staff language communication request is received from the guest terminal (3), the communication system (1) causes communication with the staff terminal (4) in a staff language to be started.

## Description

### Technical Field

The present invention relates to a communication system that is capable of communicating with a guest terminal used by a guest and a staff terminal used by staff.

### Background Art

These days, various systems to be used at facilities such as hotels have been proposed. For example, there is proposed a system that can be used at a time of communicating a request to a person at reception from a hotel room in a different language (for example, see Patent Literature 1).

However, conventional systems do not assume a situation where languages of guests (overnight visitors) are varied but languages of staff are limited (each staff member is able to cope with one to several languages). Moreover, there may be a case where a guest is able to speak multiple languages, and the guest can perform smooth communication by directly speaking in the language of the staff rather than speaking in mother tongue and using machine translation.

### Citation List

### Patent Literature

Patent Literature 1: Japanese Patent Laid-Open No. 2015-56080

### Summary of Invention

### Technical Problem

The present invention has been made in view of the above circumstances. An object of the present invention is to provide a communication system that allows communication requests from guests in various languages to be appropriately handled even when languages of staff are limited.

### Solution to Problem

An aspect of the present invention is a communication system, the communication system including: a communication request reception unit for receiving a communication request that is made through operation of a guest terminal by a guest, and receiving, as guest language information, language information that is set in the guest terminal, the communication request and the language information being received from the guest terminal; a staff information acquisition unit for acquiring, in relation to each of a plurality of staff terminals, staff language information that is registered in the staff terminal as a language that a staff member is able to use, and availability information indicating whether the staff member is available to deal with the guest or not; a determination unit for determining, in relation to the staff terminal of the staff member who is available to deal with the guest among the plurality of staff terminals, whether the guest language information received from the guest terminal matches any staff language information registered in the staff terminal or not; a first communication start unit for causing the staff terminal in which the staff language information matching the guest language information is registered to start communication with the guest terminal, in a case where match is determined by the determination unit; a selection request transmission unit for transmitting, to the guest terminal, a selection request to select one of communication through machine translation and communication in a language that is registered as the staff language information, in a case where non-match is determined by the determination unit; a second communication start unit for causing any staff terminal of a staff member who is available to deal with the guest among the plurality of staff terminals to start communication with the guest terminal through machine translation, in a case where a machine translation communication request requesting the communication through machine translation is received from the guest terminal as a response to the selection request; and a third communication start unit for causing any staff terminal of a staff member who is available to deal with the guest among the plurality of staff terminals to start communication with the guest terminal, in a case where a staff language communication request requesting the communication in a language that is registered as the staff language information is received from the guest terminal as a response to the selection request.

Another aspect of the present invention is a method performed by a communication system that is capable of communicating with a guest terminal that is used by a guest and a staff terminal that is used by a staff member, the method including: a step of receiving a communication request that is made through operation of the guest terminal by the guest, and receiving, as guest language information, language information that is set in the guest terminal, the communication request and the language information being received from the guest terminal; a step of acquiring, in relation to each of a plurality of staff terminals, staff language information that is registered in the staff terminal as a language that the staff member is able to use, and availability information indicating whether the staff member is available to deal with the guest or not; a step of determining, in relation to the staff terminal of the staff member who is available to deal with the guest among the plurality of staff terminals, whether the guest language information received from the guest terminal matches any staff language information registered in the staff terminal or not; a step of causing the staff terminal in which the staff language information matching the guest language information is registered to start communication with the guest terminal, in a case where match is determined in the step of determining; a step of transmitting, to the guest terminal, a selection request to select one of communication through machine translation and communication in a language that is registered as the staff language information, in a case where non-match is determined in the step of determining; a step of causing any staff terminal of a staff member who is available to deal with the guest among the plurality of staff terminals to start communication with the guest terminal through machine translation, in a case where a machine translation communication request requesting the communication through machine translation is received from the guest terminal as a response to the selection request; and a step of causing any staff terminal of a staff member who is available to deal with the guest among the plurality of staff terminals to start communication with the guest terminal, in a case where a staff language communication request requesting the communication in a language that is registered as the staff language information is received from the guest terminal as a response to the selection request.

Another aspect of the present invention is a program executed by a computer of a communication system that is capable of communicating with a guest terminal that is used by a guest and a staff terminal that is used by a staff member, the program being for causing the computer to perform: a process of receiving a communication request that is made through operation of the guest terminal by the guest, and receiving, as guest language information, language information that is set in the guest terminal, the communication request and the language information being received from the guest terminal; a process of acquiring, in relation to each of a plurality of staff terminals, staff language information that is registered in the staff terminal as a language that the staff member is able to use, and availability information indicating whether the staff member is available to deal with the guest or not; a process of determining, in relation to the staff terminal of the staff member who is available to deal with the guest among the plurality of staff terminals, whether the guest language information received from the guest terminal matches any staff language information registered in the staff terminal or not; a process of causing the staff terminal in which the staff language information matching the guest language information is registered to start communication with the guest terminal, in a case where match is determined by the process of determining; a process of transmitting, to the guest terminal, a selection request to select one of communication through machine translation and communication in a language that is registered as the staff language information, in a case where non-match is determined by the process of determining; a process of causing any staff terminal of a staff member who is available to deal with the guest among the plurality of staff terminals to start communication with the guest terminal through machine translation, in a case where a machine translation communication request requesting the communication through machine translation is received from the guest terminal as a response to the selection request; and a process of causing any staff terminal of a staff member who is available to deal with the guest among the plurality of staff terminals to start communication with the guest terminal, in a case where a staff language communication request requesting the communication in a language that is registered as the staff language information is received from the guest terminal as a response to the selection request.

As described below, the present invention includes other aspects. Accordingly, disclosure of the invention is intended to provide some aspects of the present invention, and is not intended to limit the scope of the invention described and claimed herein.

### Brief Description of Drawings

[Figure 1] Figure 1 is a block diagram showing a configuration of a communication system according to an embodiment of the present invention.
[Figure 2] Figure 2 is a sequence diagram for describing an operation of the communication system according to the embodiment of the present invention.

### Description of Embodiment

Hereinafter, the present invention will be described in detail. However, the following detailed description and the appended drawings are not intended to limit the invention.

A communication system of the present invention is a communication system capable of communicating with a guest terminal that is used by a guest and a staff terminal that is used by a staff member, the communication system including a communication request reception unit for receiving a communication request that is made through operation of the guest terminal by the guest, and receiving, as guest language information, language information that is set in the guest terminal, the communication request and the language information being received from the guest terminal, a staff information acquisition unit for acquiring, in relation to each of a plurality of staff terminals, staff language information that is registered in the staff terminal as a language that the staff member is able to use, and availability information indicating whether the staff member is available to deal with the guest or not, a determination unit for determining, in relation to the staff terminal of the staff member who is available to deal with the guest among the plurality of staff terminals, whether the guest language information received from the guest terminal matches any staff language information registered in the staff terminal or not, a first communication start unit for causing the staff terminal in which the staff language information matching the guest language information is registered to start communication with the guest terminal, in a case where match is determined by the determination unit, a selection request transmission unit for transmitting, to the guest terminal, a selection request to select one of communication through machine translation and communication in a language that is registered as the staff language information, in a case where non-match is determined by the determination unit, a second communication start unit for causing any staff terminal of a staff member who is available to deal with the guest among the plurality of staff terminals to start communication with the guest terminal through machine translation, in a case where a machine translation communication request requesting the communication through machine translation is received from the guest terminal as a response to the selection request, and a third communication start unit for causing any staff terminal of a staff member who is available to deal with the guest among the plurality of staff terminals to start communication with the guest terminal, in a case where a staff language communication request requesting the communication in a language that is registered as the staff language information is received from the guest terminal as a response to the selection request.

According to the configuration, in the case where guest language information received from a guest terminal matches any staff language information registered in the staff terminal of a staff member who is available to deal with the guest among a plurality of staff terminals, communication is started between the staff terminal and the guest terminal. In the case of non-match, the guest terminal is caused to select one of communication through machine translation and communication in a language that is registered as the staff language information, and one of the communication through machine translation and the communication in a language that is registered as the staff language information is started between the guest terminal and any staff terminal of a staff member who is available to deal with the guest among the plurality of staff terminals. In this manner, even when languages of staff are limited, communication requests from guests in various languages can be appropriately handled.

Furthermore, with the communication system of the present invention, in the communication through machine translation, guest speech information input from the guest terminal may be transcribed by speech recognition, and be machine-translated into a language that is registered as the staff language information and be displayed on a screen of the staff terminal, and staff speech information input from the staff terminal may be transcribed by speech recognition, and be machine-translated into a language that is set as the guest language information and be displayed on a screen of the guest terminal.

According to the configuration, the guest speech information input from the guest terminal is machine-translated and displayed on the screen of the staff terminal, and the staff speech information input from the staff terminal is machine-translated and displayed on the screen of the guest terminal. Communication through machine translation is thus appropriately performed.

A method of the present invention is a method performed by a communication system that is capable of communicating with a guest terminal that is used by a guest and a staff terminal that is used by a staff member, the method including a step of receiving a communication request that is made through operation of the guest terminal by the guest, and receiving, as guest language information, language information that is set in the guest terminal, the communication request and the language information being received from the guest terminal, a step of acquiring, in relation to each of a plurality of staff terminals, staff language information that is registered in the staff terminal as a language that the staff member is able to use, and availability information indicating whether the staff member is available to deal with the guest or not, a step of determining, in relation to the staff terminal of the staff member who is available to deal with the guest among the plurality of staff terminals, whether the guest language information received from the guest terminal matches any staff language information registered in the staff terminal or not, a step of causing the staff terminal in which the staff language information matching the guest language information is registered to start communication with the guest terminal, in a case where match is determined in the step of determining, a step of transmitting, to the guest terminal, a selection request to select one of communication through machine translation and communication in a language that is registered as the staff language information, in a case where non-match is determined in the step of determining, a step of causing any staff terminal of a staff member who is available to deal with the guest among the plurality of staff terminals to start communication with the guest terminal through machine translation, in a case where a machine translation communication request requesting the communication through machine translation is received from the guest terminal as a response to the selection request, and a step of causing any staff terminal of a staff member who is available to deal with the guest among the plurality of staff terminals to start communication with the guest terminal, in a case where a staff language communication request requesting the communication in a language that is registered as the staff language information is received from the guest terminal as a response to the selection request.

Also with the method, as with the system described above, in the case where guest language information received from a guest terminal matches any of pieces of staff language information received from a plurality of staff terminals, the corresponding staff terminal is caused to start communication with the guest terminal. In the case of non-match, the guest terminal is caused to select one of communication through machine translation and communication in a language that is registered as the staff language information, and one of the communication through machine translation and the communication in a language that is registered as the staff language information is started. In this manner, even when languages of staff are limited, communication requests from guests in various languages can be appropriately handled.

A program of the present invention is a program executed by a computer of a communication system that is capable of communicating with a guest terminal that is used by a guest and a staff terminal that is used by a staff member, the program being for causing the computer to perform a process of receiving a communication request that is made through operation of the guest terminal by the guest, and receiving, as guest language information, language information that is set in the guest terminal, the communication request and the language information being received from the guest terminal, a process of acquiring, in relation to each of a plurality of staff terminals, staff language information that is registered in the staff terminal as a language that the staff member is able to use, and availability information indicating whether the staff member is available to deal with the guest or not, a process of determining, in relation to the staff terminal of the staff member who is available to deal with the guest among the plurality of staff terminals, whether the guest language information received from the guest terminal matches any staff language information registered in the staff terminal or not, a process of causing the staff terminal in which the staff language information matching the guest language information is registered to start communication with the guest terminal, in a case where match is determined by the process of determining, a process of transmitting, to the guest terminal, a selection request to select one of communication through machine translation and communication in a language that is registered as the staff language information, in a case where non-match is determined by the process of determining, a process of causing any staff terminal of a staff member who is available to deal with the guest among the plurality of staff terminals to start communication with the guest terminal through machine translation, in a case where a machine translation communication request requesting the communication through machine translation is received from the guest terminal as a response to the selection request, and a process of causing any staff terminal of a staff member who is available to deal with the guest among the plurality of staff terminals to start communication with the guest terminal, in a case where a staff language communication request requesting the communication in a language that is registered as the staff language information is received from the guest terminal as a response to the selection request.

Also with the program, as with the system described above, in the case where guest language information received from a guest terminal matches any of pieces of staff language information received from a plurality of staff terminals, the corresponding staff terminal is caused to start communication with the guest terminal. In the case of non-match, the guest terminal is caused to select one of communication through machine translation and communication in a language that is registered as the staff language information, and one of the communication through machine translation and the communication in a language that is registered as the staff language information is started. In this manner, even when languages of staff are limited, communication requests from guests in various languages can be appropriately handled.

According to the present invention, even when languages of staff are limited, communication requests from guests in various languages can be appropriately handled.

### (Embodiment)

Hereinafter, a communication system of an embodiment of the present invention will be described with reference to the drawings. The present embodiment describes, as an example, a case of a communication system that is used as a multi-language contact center system in facilities such as hotels. Various functions of the communication system described below may be implemented through execution of programs stored in a memory of the communication system, for example.

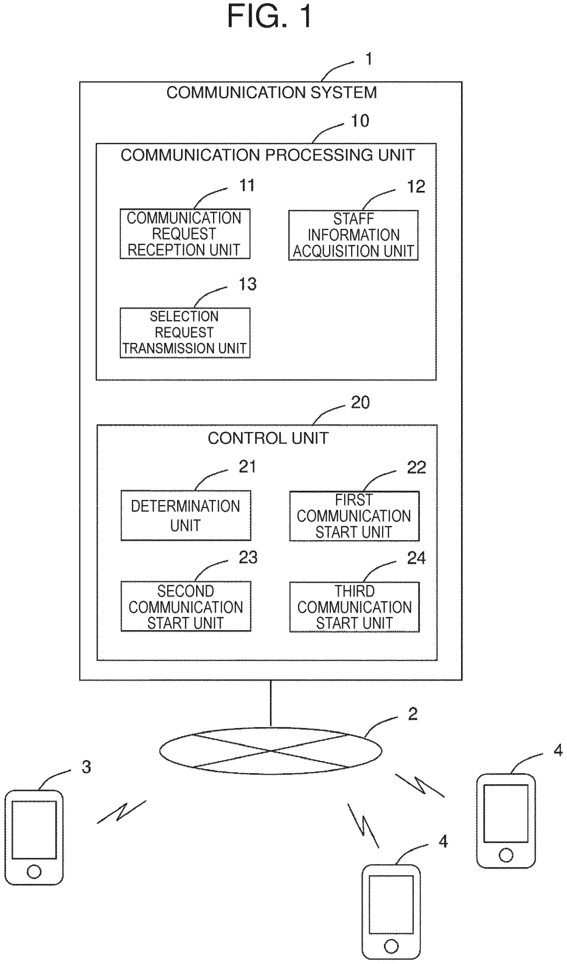

A configuration of the communication system of the embodiment of the present invention will be described with reference to the drawing. Figure 1 is a block diagram showing the configuration of the communication system of the present embodiment. As shown in Figure 1, a communication system 1 is communicably connected, via a network 2, to a guest terminal 3 that is used by a guest (such as a guest staying at a hotel), and a staff terminal 4 that is used by staff (such as staff at the hotel). For example, the communication system 1 includes a cloud server device, and the guest terminal 3 and the staff terminal 4 include terminal devices such as smartphones. Additionally, for the sake of description, Figure 1 shows one guest terminal 3 and two staff terminals 4, but there may be two or more guest terminals 3 and three or more staff terminals 4.

As shown in Figure 1, the communication system 1 includes a communication processing unit 10 and a control unit 20. The communication processing unit 10 includes a communication request reception unit 11, staff information acquisition unit 12, and a selection request transmission unit 13. Furthermore, the control unit 20 includes a determination unit 21, a first communication start unit 22, a second communication start unit 23, and a third communication start unit 24.

The communication request reception unit 11 includes a function of receiving, from the guest terminal 3, a communication request that is made by the guest performing a predetermined call operation (such as a click operation on a "staff call" button) on the guest terminal 3. Furthermore, the communication request reception unit 11 includes a function of receiving, from the guest terminal 3, as guest language information indicating a language that is usually used by the guest, language information (such as Japanese) that is set in the guest terminal 3.

The staff information acquisition unit 12 includes a function of acquiring, in relation to each of a plurality of staff terminals 4, staff language information that is registered in the staff terminal 4 as a language that a staff member can use (for example, staff member A: English, staff member B: English and Japanese), and availability information indicating whether the staff member in question is able to deal with the guest or not. The availability information may be information indicating available/unavailable at a current time point (for example, staff member A: available, staff member B: unavailable), or may be information indicating the number of persons that can be dealt with at a current time point (for example, staff member A: 2 persons, staff member B: 0 persons). The availability information may be set by the staff member himself/herself by using the staff terminal 4, or may be set in the communication system 1 by a system administrator. Furthermore, the staff language information may include, in addition to a language that is registered by the staff member himself/herself by using the staff terminal 4, a language (an international language such as English) that is registered by the system administrator.

The determination unit 21 includes a function of determining, in relation to the staff terminal 4 of a staff member who is available to deal with the guest among a plurality of staff terminals 4, when a communication request is transmitted from the guest terminal 3, whether the guest language information received from the guest terminal 3 (transmitted from the guest terminal 3 together with the communication request) matches any staff language information that is registered in the staff terminal 4.

For example, in the case where the guest language information that is transmitted from the guest terminal 3 together with the communication request is "Japanese", and "staff member A: English" and "staff member B: English and Japanese" are true with respect to the staff who are available to deal with the guest, the determination unit 21 determines "match: staff member B". In the case where the guest language information that is transmitted from the guest terminal 3 together with the communication request is "Japanese", and "staff member A: English" and "staff member C: English and Chinese" are true with respect to the staff who are available to deal with the guest, the determination unit 21 determines "no match".

The first communication start unit 22 includes a function of causing, in the case where "match" is determined by the determination unit 21, the staff terminal 4 in which the staff language information matching the guest language information is registered (for example, the staff terminal 4 of the staff member B) to start communication with the guest terminal 3. More specifically, the first communication start unit 22 connects the guest terminal 3 and the staff terminal 4 of the staff member B, and enables communication (voice call or message transmission) between the guest and the staff member B in the guest language (for example, Japanese).

The selection request transmission unit 13 includes a function of transmitting, to the guest terminal 3, a selection request to select one of "communication through machine translation" and "communication in a language that is registered as the staff language information", in a case where "no match" is determined by the determination unit 21. When the selection request is received, the guest terminal 3 displays a selection screen for selecting one of "communication through machine translation" and "communication in a language that is registered as the staff language information", and receives a selection input from the guest.

In the case where the selection input from the guest is "communication through machine translation", a machine translation communication request requesting "communication through machine translation" is transmitted from the guest terminal 3 to the communication system 1 as a response to the selection request.

The second communication start unit 23 includes a function of causing, when the communication request is received from the guest terminal 3, one of the staff terminals 4 of the staff members who are available to deal with the guest (the staff member A or C) among a plurality of staff terminals 4 to start communication with the guest terminal 3 through machine translation. More specifically, the second communication start unit 23 connects the guest terminal 3 and the staff terminal 4 of the staff member A or C, and enables communication (voice call or message transmission) between the guest and the staff member A or C through machine translation.

In the communication through machine translation, guest speech information (for example, speech information in Japanese) input from the guest terminal 3 is transcribed by speech recognition, and is then machine-translated into a language that is registered as the staff language information (for example, English) and is displayed on a screen of the staff terminal 4 (for example, the staff terminal 4 of the staff member A), and staff speech information (for example, speech information in English) input from the staff terminal 4 (for example, the staff terminal 4 of the staff member A) is transcribed by speech recognition, and is then machine-translated into a language that is set as the guest language information (for example, Japanese) and is displayed on a screen of the guest terminal 3.

In the case where the selection input from the guest is "communication in a language that is registered as the staff language information", a staff language communication request requesting "communication in a language that is registered as the staff language information" is transmitted from the guest terminal 3 to the communication system 1 as a response to the selection request. In this case, an operation to select a staff language to be used for communication (a staff language of a staff member who is available; may include an international language registered by the system administrator) may be performed on the guest terminal 3, and the staff language information selected by the guest is transmitted from the guest terminal 3 to the communication system 1 together with the staff language communication request.

The third communication start unit 24 includes a function of causing, when the staff language communication request is received from the guest terminal 3, one of the staff terminals 4 of the staff members who are available to deal with the guest (the staff member A or C) among a plurality of staff terminals 4 to start communication with the guest terminal 3. More specifically, the third communication start unit 24 connects the guest terminal 3 and the staff terminal 4 of the staff member A or C, and enables communication (voice call or message transmission) between the guest and the staff member A or C in a staff language selected by the guest (for example, English).

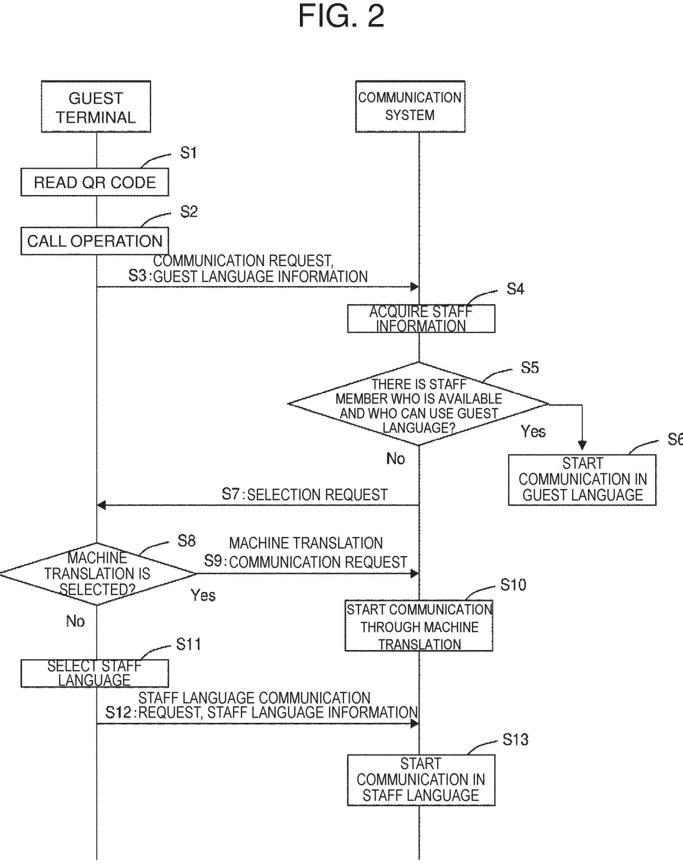

An operation of the communication system 1 configured in the above manner will be described with reference to the sequence diagram in Figure 2.

As shown in Figure 2, in the case of using the communication system 1 of the present embodiment, when a predetermined login (for example, reading of a QR code installed in a room where the guest is staying) operation is performed with the guest terminal 3 (S1) and then a predetermined call operation (for example, a click operation on a "staff call" button) is performed (S2), the communication request and the guest language information (for example, Japanese) are transmitted from the guest terminal 3 to the communication system 1 (S3).

The communication system 1 acquires, in relation to each of a plurality of staff terminals 4, the staff language information that is registered in the staff terminal 4 as the language that the staff member can use (for example, staff member A: English, staff member B: English and Japanese, staff member C: English and Chinese), and the availability information indicating whether the corresponding staff member is available to deal with the guest (for example, staff member A: 2 persons, staff member B: 0 persons, staff member C: 1 person)(S4). Then, whether there is a staff member who is available and who can use the guest language is determined (S5).

For example, in the case where the guest language information transmitted from the guest terminal 3 together with the communication request is "Japanese", and the staff members who are available to deal with the guest are "staff member A: English" and "staff member B: English and Japanese", "match: staff member B" is determined at the communication system 1 (S5), and communication (voice call or message transmission) in the guest language (for example, Japanese) is started between the guest terminal 3 and the staff terminal 4 in which the staff language information matching the guest language information is registered (for example, the staff terminal 4 of the staff member B) (S6).

In the case where the guest language information transmitted from the guest terminal 3 together with the communication request is "Japanese", and the staff members who are available to deal with the guest are "staff member A: English" and "staff member C: English and Chinese", "no match" is determined at the communication system 1 (S5), and the selection request to select one of "communication through machine translation" and "communication in a language that is registered as the staff language information" is transmitted from the communication system 1 to the guest terminal 3 (S7).

When a selection input for "communication through machine translation" is performed by the guest terminal 3 (S8), the machine translation communication request is transmitted from the guest terminal 3 to the communication system 1 (S9), and communication (voice call or message transmission) through machine translation is started between the guest terminal 3 and one of the staff terminals 4 of the staff who are available to deal with the guest (the staff member A or C) (S10).

On the other hand, when a selection input for "communication in a language that is registered as the staff language information" is performed by the guest terminal 3, and an operation to select the staff language to be used in communication is performed (S11), the staff language communication request and the staff language information selected by the guest are transmitted from the guest terminal 3 to the communication system 1 (S12), and communication (voice call or message transmission) in the staff language selected by the guest (for example, English) is started between the guest terminal 3 and one of the staff terminals 4 of the staff who are available to deal with the guest (the staff member A or C) (S13).

With the communication system 1 of the present embodiment as described above, in the case where the guest language information received from the guest terminal 3 matches one of the staff language information registered in the staff terminal 4 of a staff member who is available to deal with the guest among a plurality of staff terminals 4, communication is started between the staff terminal 4 in question and the guest terminal 3. In the case where there is no match, the guest terminal 3 is caused to select one of communication through machine translation and communication in a language that is registered as the staff language information, and communication through machine translation or communication in a language that is registered as the staff language information is started between the guest terminal 3 and one of the staff terminals 4 of the staff members who are available to deal with the guest among a plurality of staff terminals 4. In this manner, even when languages of staff are limited, communication requests from guests in various languages can be appropriately handled.

Furthermore, in the present embodiment, the guest speech information input from the guest terminal 3 is machine-translated and displayed on the screen of the staff terminal 4, and the staff speech information input from the staff terminal 4 is machine-translated and displayed on the screen of the guest terminal 3. Communication through machine translation is thus appropriately performed.

Heretofore, the embodiment of the present invention has been described, but the scope of the present invention is not limited thereto, and can be changed/modified according to the object within the scope described in the claims.

### Industrial Applicability

As described above, the communication system according to the present invention achieves an effect that, even when languages of staff are limited, communication requests from guests in various languages can be appropriately handled, and is thus used as a multi-language contact center system in facilities such as hotels, and is advantageous.

### Reference Signs List

- 1: communication system
- 2: network
- 3: guest terminal
- 4: staff terminal
- 10: communication processing unit
- 11: communication request reception unit
- 12: staff information acquisition unit
- 13: selection request transmission unit
- 20: control unit
- 21: determination unit
- 22: first communication start unit
- 23: second communication start unit
- 24: third communication start unit

## Claims

1. A communication system capable of communicating with a guest terminal that is used by a guest and a staff terminal that is used by a staff member, the communication system comprising:
a communication request reception unit for receiving a communication request that is made through operation of the guest terminal by the guest, and receiving, as guest language information, language information that is set in the guest terminal, the communication request and the language information being received from the guest terminal;
a staff information acquisition unit for acquiring, in relation to each of a plurality of staff terminals, staff language information that is registered in the staff terminal as a language that the staff member is able to use, and availability information indicating whether the staff member is available to deal with the guest or not;
a determination unit for determining, in relation to the staff terminal of the staff member who is available to deal with the guest among the plurality of staff terminals, whether the guest language information received from the guest terminal matches any staff language information registered in the staff terminal or not;
a first communication start unit for causing the staff terminal in which the staff language information matching the guest language information is registered to start communication with the guest terminal, in a case where match is determined by the determination unit;
a selection request transmission unit for transmitting, to the guest terminal, a selection request to select one of communication through machine translation and communication in a language that is registered as the staff language information, in a case where non-match is determined by the determination unit;
a second communication start unit for causing any staff terminal of a staff member who is available to deal with the guest among the plurality of staff terminals to start communication with the guest terminal through machine translation, in a case where a machine translation communication request requesting the communication through machine translation is received from the guest terminal as a response to the selection request; and
a third communication start unit for causing any staff terminal of a staff member who is available to deal with the guest among the plurality of staff terminals to start communication with the guest terminal, in a case where a staff language communication request requesting the communication in a language that is registered as the staff language information is received from the guest terminal as a response to the selection request.

2. The communication system according to claim 1, wherein, in the communication through machine translation,
guest speech information input from the guest terminal is transcribed by speech recognition, and is then machine-translated into a language that is registered as the staff language information and is displayed on a screen of the staff terminal, and
staff speech information input from the staff terminal is transcribed by speech recognition, and is then machine-translated into a language that is set as the guest language information and is displayed on a screen of the guest terminal.

3. A method performed by a communication system that is capable of communicating with a guest terminal that is used by a guest and a staff terminal that is used by a staff member, the method comprising:
a step of receiving a communication request that is made through operation of the guest terminal by the guest, and receiving, as guest language information, language information that is set in the guest terminal, the communication request and the language information being received from the guest terminal;
a step of acquiring, in relation to each of a plurality of staff terminals, staff language information that is registered in the staff terminal as a language that the staff member is able to use, and availability information indicating whether the staff member is available to deal with the guest or not;
a step of determining, in relation to the staff terminal of the staff member who is available to deal with the guest among the plurality of staff terminals, whether the guest language information received from the guest terminal matches any staff language information registered in the staff terminal or not;
a step of causing the staff terminal in which the staff language information matching the guest language information is registered to start communication with the guest terminal, in a case where match is determined in the step of determining;
a step of transmitting, to the guest terminal, a selection request to select one of communication through machine translation and communication in a language that is registered as the staff language information, in a case where non-match is determined in the step of determining;
a step of causing any staff terminal of a staff member who is available to deal with the guest among the plurality of staff terminals to start communication with the guest terminal through machine translation, in a case where a machine translation communication request requesting the communication through machine translation is received from the guest terminal as a response to the selection request; and
a step of causing any staff terminal of a staff member who is available to deal with the guest among the plurality of staff terminals to start communication with the guest terminal, in a case where a staff language communication request requesting the communication in a language that is registered as the staff language information is received from the guest terminal as a response to the selection request.

4. A program executed by a computer of a communication system that is capable of communicating with a guest terminal that is used by a guest and a staff terminal that is used by a staff member, the program being for causing the computer to perform:
a process of receiving a communication request that is made through operation of the guest terminal by the guest, and receiving, as guest language information, language information that is set in the guest terminal, the communication request and the language information being received from the guest terminal;
a process of acquiring, in relation to each of a plurality of staff terminals, staff language information that is registered in the staff terminal as a language that the staff member is able to use, and availability information indicating whether the staff member is available to deal with the guest or not;
a process of determining, in relation to the staff terminal of the staff member who is available to deal with the guest among the plurality of staff terminals, whether the guest language information received from the guest terminal matches any staff language information registered in the staff terminal or not;
a process of causing the staff terminal in which the staff language information matching the guest language information is registered to start communication with the guest terminal, in a case where match is determined by the process of determining;
a process of transmitting, to the guest terminal, a selection request to select one of communication through machine translation and communication in a language that is registered as the staff language information, in a case where non-match is determined by the process of determining;
a process of causing any staff terminal of a staff member who is available to deal with the guest among the plurality of staff terminals to start communication with the guest terminal through machine translation, in a case where a machine translation communication request requesting the communication through machine translation is received from the guest terminal as a response to the selection request; and
a process of causing any staff terminal of a staff member who is available to deal with the guest among the plurality of staff terminals to start communication with the guest terminal, in a case where a staff language communication request requesting the communication in a language that is registered as the staff language information is received from the guest terminal as a response to the selection request.
